# FASCICULE DE BREVET EUROPEEN

(11) **EP 2 169 195 B1**
(45) Date de publication et mention de la délivrance du brevet: **25.05.2016**
(21) Numéro de dépôt: 09170063.3
(22) Date de dépôt: 11.09.2009
(51) Int. Cl.: F02B 29/04, F28D 9/00, F28F 3/08, F02M 26/22, F28D 21/00

(54) **Elément d'échange de chaleur d'un faisceau d'échange de chaleur d'un échangeur de chaleur**
Wärmeaustauschelement von einem wärmeaustauscheinheit in einem Wärmetauscher
Heat exchanging element of a heat exchange bundle in a heat exchanger

(30) Priorité: 25.09.2008 FR 0805275
(43) Date de publication de la demande: 31.03.2010
(73) Titulaire: VALEO SYSTEMES THERMIQUES, 78320 Le Mesnil Saint-Denis (FR)
(72) Inventeur: Martins, Carlos, 78150 Le Chesnay (FR); Magnier-Cathenod, Anne-Sylvie, 92210 Saint-Cloud (FR); Bernard, Jean-Sylvain, 78320 Le Mesnil-Saint-Denis (FR); Gessier, Bertrand, 78490 Montfort-L'Amaury (FR)
(74) Mandataire: Metz, Gaëlle

(56) Documents cités:
- EP-A- 1 348 484
- EP-A- 1 985 953
- WO-A-2004/113815
- DE-A1-102006 048 667
- FR-A- 2 856 747
- FR-A- 2 864 582
- US-A- 5 180 004

## Description

L'invention concerne le domaine des échangeurs de chaleur et plus particulièrement les échangeurs de chaleur utilisés dans le domaine automobile. l'invention concerne en particulier un élément d'échange de chaleur pour un échangeur de chaleur à plaques. FR 2 864 582 divulgue un tel élément selon le préambule de la revendication 1.

Un moteur thermique de véhicule automobile comporte une chambre de combustion, généralement formée par une pluralité de cylindres, dans laquelle un mélange de comburant et de carburant est brûlé pour générer le travail du moteur. Le comburant comporte de l'air, qui peut être comprimé ou non, selon que le moteur comporte un turbocompresseur ou non. Les gaz admis dans la chambre de combustion sont dénommés gaz d'admission.

Ces gaz d'admission doivent être refroidis avant d'être introduits dans la chambre de combustion, cette fonction est remplie par l'échangeur de chaleur.

De manière classique, un échangeur de chaleur comporte un faisceau d'échange de chaleur constitué par une multiplicité d'éléments d'échange empilés entre deux plaques d'extrémités (plaque de fond et plaque de dessus). Les espaces entre les éléments d'échange du faisceau forment des canaux de conduite d'un flux de gaz à refroidir, ici des gaz d'admission. Les éléments d'échange du faisceau sont creux et conduisent un fluide caloporteur, destiné à échanger des calories avec le flux de gaz à refroidir circulant dans les canaux de conduite de fluide. Chaque élément d'échange du faisceau est traditionnellement formé de deux plaques, appelées aussi coquilles. Des ailettes de perturbation sont traditionnellement disposées dans les canaux afin de ralentir la traversée du flux de gaz dans lesdits canaux et ainsi favoriser les échanges de chaleur (ou de calories) entre le flux de gaz et le fluide caloporteur.

Dans les échangeurs de ce type, les éléments d'échange se présentent classiquement sous la forme d'un pavé rectangulaire avec deux passages de communication, par exemple, circulaires, ménagés le long d'un petit côté de l'élément d'échange. Ces passages de communication permettent d'alimenter les éléments d'échange en fluide caloporteur sur toute la hauteur de l'échangeur, les passages permettant respectivement à l'introduction et l'évacuation du fluide caloporteur de l'échangeur.

Le flux de gaz est, quant à lui, introduit dans l'échangeur via un collecteur d'entrée débouchant sur le faisceau d'échange de chaleur. Après refroidissement, il est collecté en sortie dudit faisceau dans un collecteur de sortie.

Afin de réduire les émissions polluantes, il est connu d'introduire dans le moteur des gaz d'échappement recirculés. Ces derniers sont introduits via un ou plusieurs points d'introduction ménagés dans une conduite de gaz s'étendant entre l'échangeur et le moteur, afin que les gaz recirculés se mélangent avec les gaz refroidis provenant de l'échangeur. De manière classique, le mélange n'est pas homogène entre les gaz recirculés et les gaz d'admission lorsqu'ils sont admis dans le moteur, ce qui dégrade les performances de la combustion.

Afin de résoudre cet inconvénient, une solution consiste à augmenter le nombre de points d'introduction de gaz recirculés dans la conduite. Cependant, cela entraîne des modifications structurales importantes et l'utilisation de pièces supplémentaires (rail, etc.) entraînant une augmentation des coûts et de l'encombrement.

Une tendance actuelle vise à rapprocher au maximum l'échangeur de chaleur du moteur pour gagner en compacité, entraînant une diminution de la longueur de la conduite d'amenée des gaz et par conséquent une diminution du nombre de points d'introduction potentiels.

Afin d'éliminer ces inconvénients, la demanderesse propose un ensemble d'un organe d'admission d'un mélange de deux gaz, de moyens de mélange des deux gaz et de moyens d'échange de chaleur avec un des deux gaz, ensemble caractérisé par le fait que les moyens d'échange de chaleur sont agencés pour recevoir les deux gaz et les mélanger sur une pluralité de zones élémentaires de mélange, discrètes et spatialement réparties.

L'invention est née de l'admission de gaz dans un moteur thermique à combustion mais elle concerne tout organe d'admission d'un mélange de deux gaz dont un des gaz doit être refroidi ou réchauffé.

On entend par zone élémentaire de mélange discrète, une zone dans laquelle le mélange entre les deux gaz est réalisé localement. La pluralité de zones élémentaires discrètes correspond à une pluralité de points d'injection d'un gaz dans le flux d'un autre gaz. Autrement dit, les deux gaz sont mélangés localement l'un avec l'autre pour chacune des zones isolées puis les mélanges « locaux » sont réunis pour former le flux de gaz mélangés.

Ainsi, en divisant la zone de mélange des deux gaz en zones élémentaires discrètes spatialement réparties, on obtient, pour chaque zone élémentaire, des mélanges « locaux » homogènes spatialement répartis. Les zones de mélange élémentaires discrètes ont peu d'interaction les unes avec les autres, ce qui garantit que le mélange des gaz est réalisé de manière uniforme pour chacune des zones élémentaires. De manière avantageuse, les mélanges « locaux » sont tous réunis en un mélange « global » homogène qui est admis par l'organe d'admission.

En outre, les fonctions d'échange et de mélange sont assurées par les mêmes moyens ce qui permet de conserver un encombrement réduit.

De préférence, l'organe d'admission se présente sous la forme d'un moteur thermique à combustion interne et les moyens d'échange de chaleur sous la forme d'un échangeur de chaleur, le moteur étant destiné à consommer le mélange des deux gaz, le premier gaz échangeant de la chaleur avec l'échangeur de chaleur, le second gaz étant diffusé par l'échangeur de chaleur.

De manière avantageuse, l'échangeur de chaleur remplit les fonctions de refroidissement et de mélange. Ainsi, il n'est pas nécessaire d'ajouter des pièces supplémentaires entre le moteur et l'échangeur de chaleur pour permettre le mélange des deux gaz.

Selon une forme de réalisation particulière de l'invention, l'échangeur de chaleur permet de réchauffer le premier gaz, ce qui est particulièrement avantageux lorsque le premier gaz est un flux d'air d'admission de faible température.

Selon une forme particulière de réalisation l'invention, l'échangeur de chaleur se présente sous la forme d'un échangeur de chaleur à plaques.

Selon une autre forme de réalisation de l'invention, l'échangeur de chaleur se présente sous la forme d'un échangeur de chaleur à tubes.

L'invention concerne également un élément d'échange de chaleur pour un échangeur de chaleur à plaques, destiné à échanger de la chaleur avec un premier flux de gaz par circulation d'un fluide caloporteur, comportant un canal de circulation du fluide caloporteur et caractérisé par le fait que l'élément d'échange de chaleur comprend :
- des moyens d'introduction d'un deuxième flux de gaz dans ledit élément d'échange de chaleur,
- des moyens de répartition et de diffusion du deuxième flux de gaz hors dudit élément, le deuxième flux de gaz se mélangeant au premier flux de gaz, et
- un canal de transport du deuxième flux de gaz reliant lesdits moyens d'introduction auxdits moyens de répartition et de diffusion.

Le mélange des gaz est réalisé de manière discrète pour un élément d'échange de chaleur. Le flux de gaz à diffuser est réparti et diffusé par les moyens de répartition et de diffusion au niveau de chaque plaque ce qui permet de former des zones de mélanges locales et isolées qui favorisent l'homogénéisation du mélange.

De préférence, le deuxième flux de gaz se mélange au premier flux de gaz sur une pluralité de zones élémentaires de mélange, discrètes et spatialement réparties.

Selon une forme préférée de l'invention, le premier flux de gaz est un flux de gaz chaud à refroidir par l'échangeur de chaleur.

De préférence, les canaux de circulation du fluide caloporteur et de transport du deuxième flux de gaz sont formés dans ledit élément d'échange de chaleur.

De préférence, l'élément d'échange de chaleur est formé de deux plaques en vis-à-vis.

De préférence encore, les plaques sont embouties pour former les canaux de circulation du fluide caloporteur et de transport du deuxième flux de gaz.

De préférence, les canaux de circulation du fluide caloporteur et de transport du deuxième flux de gaz sont séparés par des moyens de rupture de conduction thermique.

Cela est particulièrement avantageux lorsque le premier flux de gaz est un flux de gaz à refroidir. Le canal de circulation du fluide caloporteur (fluide basse température) est isolé thermiquement du canal de distribution du deuxième flux de gaz à diffuser (fluide haute température), évitant ainsi de refroidir le deuxième flux de gaz et limitant la formation de condensats pouvant encrasser le canal de distribution du deuxième flux de gaz à diffuser.

De préférence encore, lesdits moyens de rupture de conduction thermique se présentent sous la forme de fentes de rupture thermique formées dans l'élément d'échange de chaleur entre le canal de circulation du fluide caloporteur et le canal de transport du deuxième flux de gaz.

De préférence toujours, lesdits moyens de répartition et de diffusion du deuxième flux de gaz hors de l'élément d'échange de chaleur se présentent sous la forme d'ouvertures de diffusion ménagées dans le canal de distribution du deuxième flux de gaz à diffuser.

Les ouvertures de diffusion permettent de former des zones élémentaires de mélange, discrètes et spatialement réparties. Au niveau de chaque ouverture de diffusion, le deuxième flux de gaz à diffuser se mélange localement au flux de gaz à refroidir, de manière isolée et indépendante des autres ouvertures. Ainsi et de manière globale, les deux gaz se mélangent de manière homogène.

Le premier flux de gaz circule de l'amont vers l'aval dans l'échangeur de chaleur pour lequel l'élément d'échange de chaleur est destiné. Les ouvertures de diffusion sont agencées pour diffuser le deuxième flux de gaz en aval dudit élément d'échange de chaleur.

De manière avantageuse, le deuxième flux de gaz ne circule pas dans l'échangeur de chaleur, évitant ainsi que le deuxième flux de gaz ne soit refroidi par le fluide caloporteur. La condensation des gaz du deuxième flux de gaz est limitée, évitant ainsi un encrassement de l'échangeur de chaleur par les condensats.

De préférence, lesdites ouvertures de diffusion sont orientées de manière à ce que des gaz condensés, issus de la condensation de gaz du deuxième flux de gaz à refroidir, soient guidés hors de la conduite de distribution sous l'effet de la gravité.

Si des condensats venaient à se former dans le canal de distribution du deuxième flux de gaz, ils seraient immédiatement évacués du canal par les ouvertures de diffusion orientées vers le bas, la pesanteur entraînant les condensats vers le bas de l'échangeur hors des éléments d'échange. Les éléments d'échange, ici des éléments de refroidissement, sont avantageusement protégées contre les effets nocifs des condensats tels que la corrosion.

De préférence encore, les ouvertures de diffusion sont ménagées dans l'épaisseur de l'élément d'échange de chaleur, à travers ledit canal de transport du deuxième flux de gaz.

Les ouvertures de diffusion traversantes permettent avantageusement de diffuser le gaz par les faces inférieure et supérieure de l'élément d'échange de chaleur, la circulation du flux de gaz à refroidir sur ses faces inférieure et supérieure permettant également de favoriser l'aspiration des gaz du canal de distribution hors de l'élément d'échange par aspiration Venturi. Autrement dit, les ouvertures traversantes permettent de créer un effet de succion des gaz du deuxième flux de gaz du canal de distribution, lesdits gaz étant entraînés par le premier flux de gaz divisé selon deux nappes de gaz parallèles circulant respectivement au-dessus et en dessous des ouvertures de diffusion traversantes.

De préférence toujours, la forme desdites ouvertures de diffusion traversantes est agencée pour favoriser une aspiration du deuxième flux de gaz hors de la conduite de distribution par effet Venturi.

De préférence toujours, les ouvertures de diffusion sont de plus en plus grandes au fur et à mesure que l'on s'éloigne des moyens d'introduction du deuxième flux de gaz en suivant le canal de distribution dans l'élément d'échange de chaleur.

Les moyens d'introduction et d'évacuation du fluide caloporteur et les moyens d'introduction du deuxième flux de gaz à diffuser sont ménagés à une seule et même extrémité de l'élément d'échange de chaleur, permettant ainsi de faciliter la connexion des circuits de fluide et de flux de gaz à l'échangeur de chaleur tout en conservant un encombrement minimum.

L'invention concerne également un faisceau d'échange de chaleur d'un échangeur de chaleur à plaques, comprenant au moins un élément d'échange de chaleur tel que présenté.

L'invention concerne également un échangeur de chaleur à plaques comprenant au moins un faisceau d'échange de chaleur tel que présenté. De manière préférentielle, l'échangeur de chaleur permet la circulation d'un premier flux gaz qui est un flux de gaz d'admission (G1) destinés à être consommés dans une chambre de combustion du moteur thermique, ledit premier flux de gaz échangeant avec un fluide caloporteur de refroidissement (F) qui est de l'eau glycolée et le deuxième flux de gaz est un flux de gaz d'échappement recirculés.

L'invention sera mieux comprise à l'aide du dessin annexé sur lequel :
- La figure 1 représente une vue en perspective d'un échangeur de chaleur à plaques selon l'invention ;
- la figure 2 représente une vue de côté de l'échangeur de la figure 1 ;
- la figure 3 représente une vue en perspective d'une première forme de réalisation d'un élément d'échange de chaleur d'un échangeur de chaleur à plaques selon l'invention ;
- la figure 4 représente une vue en éclaté d'une deuxième forme de réalisation d'un élément d'échange de chaleur selon l'invention ;
- la figure 5 représente une vue en perspective d'une troisième forme de réalisation d'une plaque d'un élément d'échange de chaleur selon l'invention ;
- la figure 6 représente une vue en perspective d'une quatrième forme de réalisation d'un élément d'échange de chaleur selon l'invention ;
- la figure 7 représente une vue de dessus de l'échangeur de la figure 1 ; et
- la figure 8 représente une vue en coupe selon la ligne A-A de l'échangeur de la figure 7, l'échangeur de chaleur étant vu par derrière.

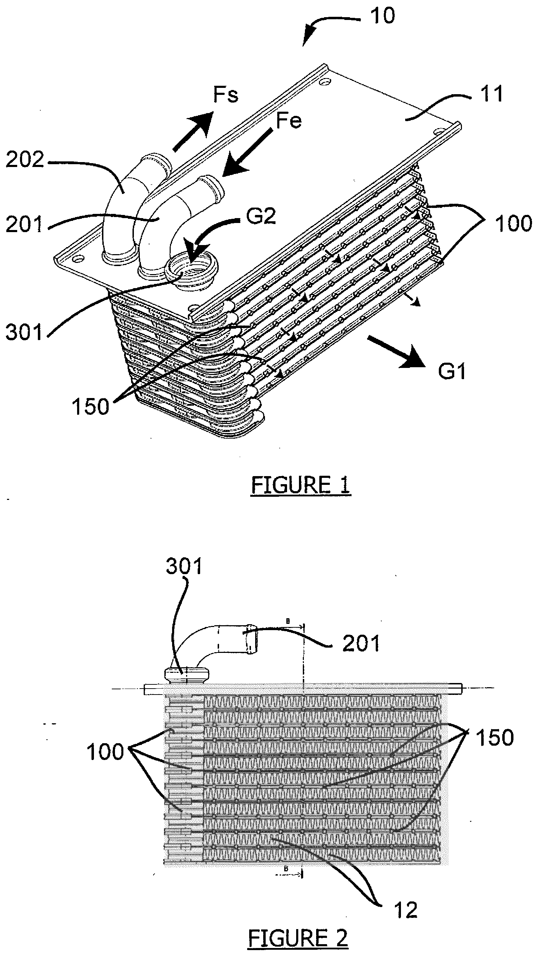

En référence à la figure 1, un échangeur de chaleur à plaques 10 comporte un faisceau d'échange de chaleur formé par un empilement d'élément d'échange de chaleur, ici des éléments de refroidissement 100 maintenus entre une plaque inférieure (non représentée) et une plaque supérieure 11. De manière classique, le faisceau d'échange de chaleur est monté dans un boîtier de support, dit boîtier de l'échangeur.

Les espaces entre les éléments d'échange 100 du faisceau forment des canaux de conduite d'un flux de gaz à refroidir, ici des gaz d'admission (G1) destinés à être consommés dans une chambre de combustion du moteur thermique. Les éléments d'échange 100 du faisceau sont creux et conduisent un fluide caloporteur (F), destiné à échanger des calories avec le flux de gaz à refroidir (G1) circulant dans les canaux de conduite de fluide. Par la suite, les termes amont et aval sont définis par rapport à la direction de circulation du flux de gaz à refroidir (G1) dans l'échangeur de chaleur 10. Par la suite, les éléments d'échange 100 sont également désignés éléments de refroidissement 100.

L'invention va être décrite pour des éléments d'échange de chaleur destinés à prélever des calories, c'est-à-dire destinés à refroidir. L'invention s'applique également à des éléments d'échange destinés à réchauffer un gaz, ce mode d'utilisation étant particulièrement approprié pour réchauffer des gaz d'admission dont la température est faible.

En référence à la figure 2, des ailettes de perturbation 12 sont traditionnellement disposées dans les canaux afin de ralentir la traversée du flux de gaz (G1), d'amont vers l'aval, dans lesdits canaux et ainsi favoriser les échanges de chaleur (ou de calories) entre le flux de gaz à refroidir (G1) et le fluide caloporteur (F).

Le flux de gaz à refroidir (G1) est introduit dans l'échangeur 10 via un collecteur d'entrée (non représenté) débouchant sur le faisceau d'échange de chaleur. Après refroidissement, il est collecté en sortie dudit faisceau dans un collecteur de sortie (non représenté).

En référence à la figure 1, le fluide caloporteur de refroidissement (F), ici de l'eau glycolée, est introduit (Flèche Fe) dans l'échangeur 10 par une tubulure d'entrée 201 et ressort par une tubulure de sortie 202 (Flèche Fs), les tubulures 201, 202 étant rapportées sur la plaque supérieure 11 de l'échangeur de chaleur 10.

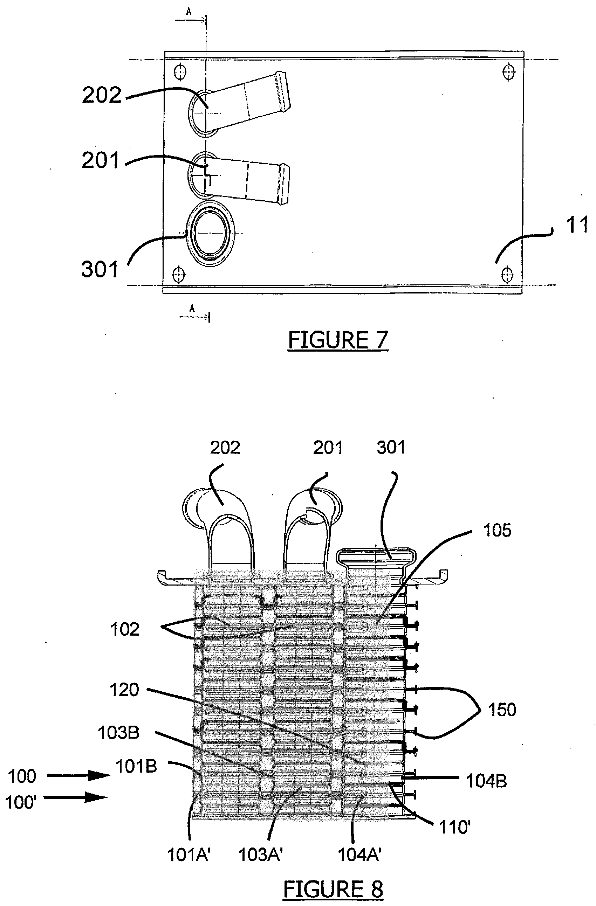

Une tubulure 301 d'amenée de gaz recirculés, désignés par la suite gaz EGR (G2), est également rapportée sur la plaque supérieure 11 de l'échangeur de chaleur 10, les trois tubulures 201, 202, 301 étant alignées le long d'un petit côté du rectangle dont la plaque supérieure 11 a la forme comme représenté sur la figure 7. Il va de soi que les tubulures pourraient être ménagées à des extrémités opposées de la plaque supérieure ou inférieure de l'échangeur de chaleur.

Les tubulures 201, 202 sont en communication fluidique avec l'élément de refroidissement 100 disposé immédiatement sous la plaque supérieure 11, elle-même communiquant directement avec un autre élément de refroidissement 100 disposée sous elle. Ainsi, le fluide caloporteur (F) circule à travers tous les éléments de refroidissement 100 empilés de l'échangeur de chaleur 10 pour prélever des calories au flux de gaz à refroidir (G1). Le fluide caloporteur (F) est divisé en flux élémentaires qui circulent respectivement dans les éléments de refroidissement 100 de l'échangeur 10. Après avoir échangé des calories avec le flux de gaz à refroidir (G1), les flux élémentaires de fluide caloporteur sont regroupés pour sortir par la tubulure de sortie 202.

En ce qui concerne la tubulure d'amenée des gaz EGR 301, elle est reliée à l'élément de refroidissement 100 disposé immédiatement sous la plaque supérieure 11, ledit élément de refroidissement 100 communiquant directement avec l'élément de refroidissement disposé sous lui. Ainsi, le flux de gaz EGR (G2) entrant par la tubulure EGR 301 est guidé dans chacun des éléments de refroidissement 100 de l'échangeur de chaleur 10. Le flux de gaz EGR (G2) est divisé en flux élémentaires qui circulent respectivement dans les éléments de refroidissement 100 de l'échangeur 10.

En référence à la figure 1, le flux de gaz EGR (G2) est acheminé vers chaque élément de refroidissement 100 de l'échangeur de chaleur 10. Il va de soi que le flux de gaz EGR (G2) pourrait également ne circuler que dans certains éléments de refroidissement 100 de l'échangeur 10.

La tubulure d'amenée des gaz EGR 301 est ici rapportée sur la plaque supérieure 11 de l'échangeur de chaleur 10. Il va de soi que la tubulure d'amenée des gaz EGR 301 pourrait également être rapportée sur la plaque inférieure de l'échangeur de chaleur 10.

### Élément d'échange de chaleur

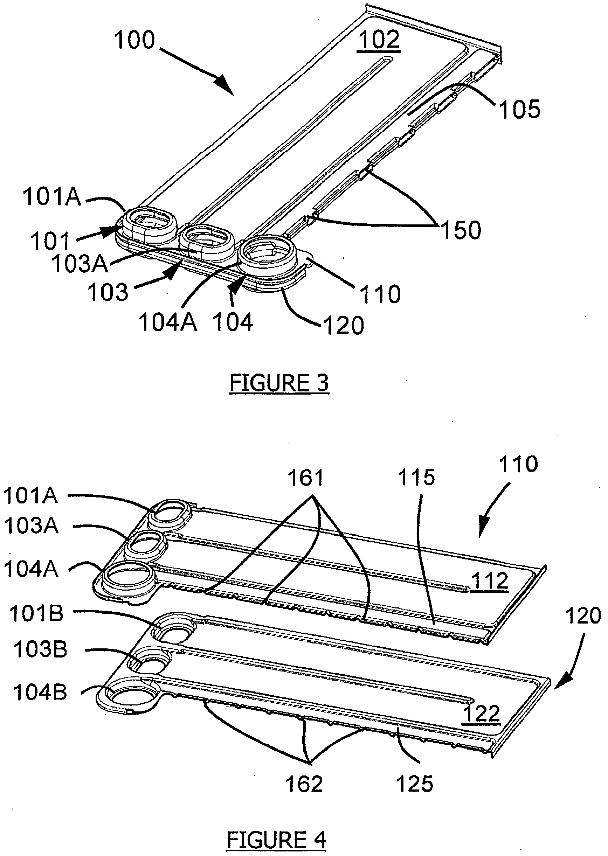

En référence à la figure 3, un élément d'échange de chaleur 100 de l'échangeur 10, ici un élément de refroidissement 100, présente une forme sensiblement rectangulaire avec des orifices traversants 101, 103, 104, ménagés le long d'un petit côté du rectangle dont l'élément d'échange de chaleur 100 a sensiblement la forme. L'élément d'échange de chaleur 100 est creux et est formé de deux plaques, appelées aussi coquilles 110, 120, la coquille supérieure 110 étant agencée pour se refermer sur la coquille inférieure 120 et former ainsi ledit élément d'échange de chaleur 100, les deux plaques 110, 120 étant en vis-à-vis.

Par « orifice traversant », on entend ici aussi bien un orifice traversant une coquille de l'élément d'échange de chaleur, qu'un orifice traversant l'élément d'échange en tant que tel. Les coquilles supérieure et inférieure comprennent respectivement des orifices traversant alignés selon un axe orthogonal audit élément d'échange.

En référence à la figure 3, l'élément d'échange de chaleur 100 comporte une partie en saillie aval, dans le prolongement du petit coté du rectangle dont l'élément d'échange de chaleur 100 a sensiblement la forme. L'orifice traversant d'amenée des gaz EGR 104, qui est circulaire, est formé en partie dans cette partie en saillie, les orifices traversants 101, 103 de l'élément d'échange de chaleur 100 ayant, pour leur part, une forme sensiblement oblongue. Les orifices traversants 101, 103, 104 sont alignés le long du petit côté du rectangle dont l'élément d'échange de chaleur a sensiblement la forme.

Par la suite, on désigne par face interne d'une coquille 110, 120 d'un élément d'échange de chaleur 100, la face de la coquille 110, 120 qui est destinée à être en contact avec la coquille complémentaire 110, 120 dudit élément d'échange de chaleur 100. On désigne par face externe, la face de la coquille 110, 120 qui est opposée à sa face interne. Ainsi, une fois l'élément d'échange de chaleur assemblé, seules les faces externes des coquilles 110, 120 demeurent visibles.

En référence à la figure 4, l'élément d'échange de chaleur 100 comporte des portions saillantes 101A, 103A, 104A, 101B, 103B, 104B dirigées vers l'extérieur de l'élément d'échange de chaleur 100, ménagées circonférentiellement à chacun des orifices 101, 103, 104 traversant les coquilles 110, 120 de l'élément d'échange de chaleur 100. Autrement dit, la coquille supérieure 110 possède des portions saillantes 101A, 103A, 104A sur sa face externe qui sont dirigées vers l'extérieure dudit élément 100, ici vers la plaque supérieure de l'échangeur de chaleur 10. La coquille inférieure 120 possède des portions saillantes 101B, 103B, 104B sur sa face externe qui sont dirigées vers l'extérieure dudit élément 100, ici vers la plaque inférieure de l'échangeur de chaleur 10.

Les orifices traversants 101, 103, 104 correspondent respectivement aux tubulures d'entrée du fluide caloporteur 201, de sortie du fluide caloporteur 202 et d'amenée des gaz EGR 301. Autrement dit, les orifices traversants 101, 103, 104 de l'élément d'échange de chaleur 100 sont respectivement en communication fluidique avec les tubulures d'entrée 201, de sortie 202 et d'amenée des gaz EGR 301.

En référence à la figure 8, dans l'échangeur de chaleur 10, les portions saillantes supérieures 101A', 103A', 104A' de la coquille supérieure 110' d'un premier élément d'échange de chaleur 100' sont respectivement alignées et en contact avec les portions saillantes inférieures 101B, 103B, 104B de la coquille inférieure 120 d'un autre élément d'échange de chaleur 100 disposé directement au dessus du premier élément d'échange de chaleur 100'.

Si l'on considère l'élément d'échange de chaleur 100 de manière isolée, les orifices traversants 101, 103, 104 permettent respectivement l'admission de fluide caloporteur (F), son évacuation et l'introduction d'un flux de gaz EGR (G2) dans l'élément d'échange de chaleur 100.

En référence à la figure 4, la coquille supérieure 110 de l'élément d'échange de chaleur 100 est agencée pour se refermer sur la coquille inférieure 120 et former un canal 102 de circulation du fluide caloporteur (F) et un canal 105 de distribution des gaz EGR (G2), les canaux de circulation et de distribution 102, 105 étant représentés sur la figure 3.

Comme on peut le voir sur les figures 4 et 8, les coquilles 110, 120 sont embouties de manière à former des demi-enveloppes pour chacun des canaux de circulation et de distribution 102, 105. Ainsi, comme on peut le voir sur la face externe de la coquille supérieure 110 de l'élément d'échange de chaleur 100, la coquille supérieure 110 comporte un embossage supérieur 112 sur sa partie amont correspondant avec un embossage inférieur 122 formé sur la partie amont de la coquille inférieure 120 pour former le canal de circulation de fluide caloporteur 102 lorsque les coquilles 110, 120 sont réunies et maintenues solidaires.

De même, la coquille supérieure 110 comporte un embossage supérieur 115 sur sa partie aval correspondant avec un embossage inférieur 125 formé sur la partie aval de la coquille inférieure 120 pour former le canal de distribution 105 lorsque les coquilles 110, 120 sont réunies et maintenues solidaires.

### Canal 102 de circulation du fluide caloporteur

En référence à la figure 3, le canal de circulation de fluide caloporteur 102, correspondant aux embossages supérieur et inférieur 112, 122, présente une forme en U dans l'élément d'échange de chaleur 100. La première branche du U s'étend dans la longueur de l'élément d'échange de chaleur 100, de l'orifice d'entrée du fluide caloporteur 101 jusqu'au côté dudit élément opposé audit orifice d'entrée 101, la base du U s'étendant dans la largeur de l'élément d'échange de chaleur 100 et la seconde branche du U, parallèle à la première, s'étendant dans la longueur de l'élément d'échange de chaleur 100 de la base du U jusqu'à l'orifice de sortie du fluide caloporteur 103, aligné avec l'orifice d'entrée de fluide caloporteur 104 le long du petit côté du rectangle dont l'élément d'échange de chaleur 100 a sensiblement la forme.

Le fluide caloporteur (F) est introduit dans l'élément d'échange de chaleur 100 par l'orifice d'entrée de fluide caloporteur 101 et circule dans le canal 102 de circulation de fluide caloporteur entre les faces internes des coquilles 110, 120 pour échanger des calories avec le flux de gaz chaud (G1) balayant les faces externes des coquilles 110, 120 formant l'élément d'échange de chaleur 100, le fluide caloporteur (F) étant ensuite évacué de l'élément d'échange de chaleur 100 par l'orifice de sortie de fluide caloporteur 103.

Dans cet exemple, le canal 102 de circulation du fluide caloporteur (F) occupe 80% du volume de l'élément d'échange de chaleur 100.

### Canal 105 de distribution des gaz EGR

Le canal de distribution 105 s'étend à partir de l'orifice 104 d'entrée de gaz EGR, dans la longueur de l'élément d'échange de chaleur 100, le canal de distribution 105 étant ménagé en aval du canal de circulation 102 à l'extrémité aval de l'élément d'échange de chaleur 100. Le canal de distribution 105, de dimension plus faible que le canal 102 de circulation du fluide caloporteur (F), comprend des ouvertures de diffusion de gaz EGR 150 réparties sur sa longueur.

Dans cet exemple, le canal de distribution des gaz EGR 105 s'étend dans toute la longueur de l'élément d'échange de chaleur 100. Il va de soi que le canal 105 pourrait ne s'étendre seulement que sur une partie de sa longueur.

### Ouvertures de diffusion 150

En référence à la figure 3, dans une première forme de réalisation, le canal de distribution de gaz EGR 105 comporte six ouvertures 150 de forme oblongue ménagées sur la partie aval du canal de distribution 105. Dans cet exemple, les ouvertures de diffusion 150 s'étendent dans une direction parallèle à l'axe de circulation du flux de gaz à refroidir (G1) dans l'échangeur de chaleur 10, sur la face aval de l'élément d'échange de chaleur 100.

L'élément d'échange de chaleur 100 est agencé pour refroidir le flux de gaz à refroidir (G1) et diffuser, via les ouvertures de diffusion 150, le flux de gaz EGR (G2) afin qu'il se mélange au flux de gaz à refroidir (G1) sur une pluralité de zones élémentaires de mélange, discrètes et spatialement réparties, lesdites zones de mélange étant formées au niveau des ouvertures de diffusion 150 comme représenté par des petites flèches noires sur la figure 1.

Les ouvertures de diffusion 150 sont formées par des embossages de diffusion ménagés sur le bord aval de chacune des coquilles de l'élément d'échange, les embossages de diffusion étant répartis spatialement dans la longueur des coquilles. Ainsi, lorsque les coquilles sont assemblées pour former l'élément d'échange de chaleur 100, les embossages de diffusion de chacune des plaques entrent en correspondance pour former les ouvertures de diffusion 150 dans la partie aval du canal de distribution des gaz EGR 105, sur la face aval de l'élément d'échange de chaleur 100.

En référence à la figure 4 représentant une élément d'échange de chaleur 100 selon une deuxième forme de réalisation de l'invention, chaque coquille 110, 120 comprend des embossages de diffusion 161, 162, une dizaine d'embossages de diffusion par coquille 110, 120 étant représentée sur la figure 4. Une fois les coquilles 110, 120 assemblées, les ouvertures de diffusion 150, ainsi formées, sont circulaires.

Il a été décrit et présenté des ouvertures de diffusion 150 oblongues et circulaires, mais il va de soi que d'autres formes d'ouvertures de diffusion 150 pourraient également convenir.

En référence à la figure 3, on remarque que les ouvertures de diffusion sont de plus en plus grandes au fur et à mesure que l'on s'éloigne de l'orifice d'amenée des gaz EGR 104 en suivant la conduite de distribution des gaz EGR 105. Les avantages procurés par cette caractéristique seront détaillés par la suite.

Les ouvertures de diffusion 150 du canal de distribution 105 sont agencées pour diffuser les gaz recirculés EGR (G2) en aval de l'échangeur de chaleur 10, évitant ainsi que les gaz EGR (G2) ne circulent dans l'échangeur 10 et ne soient refroidis avec les gaz chauds à refroidir (G1). Les gaz EGR (G2) sont des gaz salis et contiennent de nombreuses substances pouvant encrasser l'échangeur de chaleur 10, un échappement en aval permettant ainsi d'éviter tout endommagement de l'échangeur de chaleur 10.

Lors de la circulation des gaz EGR (G2) dans le canal de distribution 105, ceux-ci peuvent être amenés à se condenser. Les condensats sont corrosifs et entraînent une diminution de la durée de vie de l'échangeur de chaleur 10 en cas d'accumulation dans l'échangeur de chaleur 10. Pour éliminer cet inconvénient, dans une forme de réalisation non représentée, les ouvertures de distribution 150 sont sensiblement inclinées vers le bas de manière à ce que les condensats soient entraînés hors de la conduite de distribution des gaz EGR 105 sous l'effet de la pesanteur, protégeant ainsi la conduite de distribution 105 et, de manière plus générale, l'échangeur de chaleur 10 contre une corrosion par les condensats.

On dit que les ouvertures de diffusion 150 sont inclinées vers le bas lorsqu'elles s'étendent dans une direction oblique à l'axe de circulation du flux de gaz à refroidir (G1) dans l'échangeur de chaleur 10 et orientée vers la plaque inférieure de l'échangeur de chaleur 10.

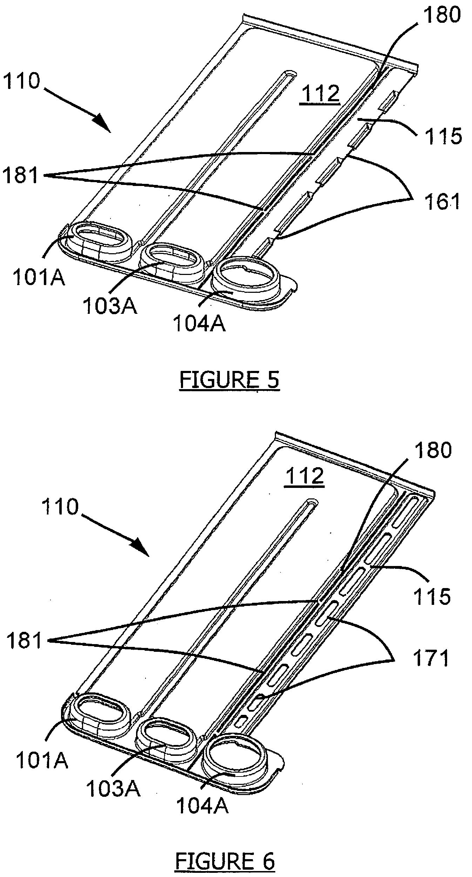

En référence à la figure 6 représentant la coquille supérieure 110 d'une élément d'échange de chaleur 100 selon une troisième forme de réalisation de l'invention, le canal de distribution des gaz EGR 105 comprend des ouvertures de diffusion 171, de forme oblongue, traversant la coquille supérieure 110 dans son épaisseur au niveau de l'embossage supérieure correspondant à la demi enveloppe du canal de distribution des gaz EGR 105. Lorsque l'on ferme l'élément d'échange de chaleur 100 en assemblant ses coquilles supérieure 110 (représentée figure 6) et inférieure 120, les ouvertures traversantes de chaque coquille 110, 120 entrent en correspondance, c'est-à-dire qu'elles sont alignées selon un axe orthogonal à la plaque, s'étendant selon la hauteur de l'élément d'échange de chaleur 100, pour former des ouvertures de diffusion 150 traversant le canal de distribution des gaz EGR 105.

Une telle configuration des ouvertures de diffusion permet de faciliter l'aspiration des gaz EGR (G2) par effet Venturi. En effet, si l'on considère un élément d'échange de chaleur 100 dans un échangeur de chaleur 10 lors de son fonctionnement, il est compris entre deux canaux de conduite d'un flux de gaz à refroidir (G1) qui balayent respectivement les faces externes des coquilles 110, 120 de l'élément d'échange de chaleur 100. La circulation d'un flux de gaz à refroidir (G1) de part et d'autre des ouvertures de diffusion 171 entraîne une aspiration des gaz EGR (G2) circulant dans le canal de distribution des gaz EGR 105 de l'élément d'échange de chaleur 100 par effet Venturi.

Il est représenté sur la figure 6 des ouvertures de diffusion 171 de forme oblongue. Cependant, il va de soi que d'autres formes d'ouvertures pourraient également convenir pour favoriser l'aspiration par effet Venturi.

En référence à la figure 6, on remarque que les ouvertures de diffusion sont de plus en plus grandes au fur et à mesure que l'on s'éloigne, en suivant la conduite de distribution des gaz EGR 105, de l'orifice d'amenée des gaz EGR 104. Les avantages procurés par cette caractéristique seront détaillés par la suite.

En référence à la figure 5 représentant une coquille supérieure 110 de l'élément d'échange de chaleur 100 selon une quatrième forme de réalisation de l'invention, le canal de distribution 105 (embossage supérieur 115) est séparé du canal 102 (embossage inférieur 112) de circulation du fluide caloporteur par des moyens 180 de rupture de pont thermique permettant d'isoler thermiquement le canal de circulation du fluide caloporteur 102, dans lequel circule un fluide à basse température (F), du canal de distribution de gaz EGR 105, dans lequel circule des gaz à haute température (G2).

Toujours en référence à la figure 5, les moyens 180 de rupture de pont thermique se présentent sous la forme d'une ligne de rupture thermique formée de fentes longitudinales 180 ménagées, pour chacune des coquilles 110, 120 de l'élément d'échange de chaleur 100, entre les embossages 112, 115 ; 122, 126 correspondant respectivement aux deux canaux de circulation 102 et de distribution 105. Grâce aux fentes de rupture thermique 180, les canaux de circulation 102 et de distribution 105 ne sont maintenus l'un à l'autre, sur chaque coquille 110, 120, que par des tenons de maintien 181 qui assurent un maintien mécanique des canaux 102, 105 les uns par rapport aux autres mais limitent les transfert d'énergie thermique.

De tels moyens de rupture thermique 180 permettent de limiter, voire de supprimer, la condensation des gaz EGR (G2) dans la conduite de distribution 105, protégeant ainsi de manière efficace l'élément d'échange de chaleur 100 contre la corrosion des condensats.

Au cours du fonctionnement du moteur à combustion thermique, des explosions surviennent dans les cylindres du moteur et génèrent des ondes acoustiques se propageant dans le moteur et, en particulier, de l'aval vers l'amont dans la ligne d'admission des gaz.

Les ondes acoustiques dans la ligne d'admission des gaz entraînent des variations de la pression des gaz circulant dans l'échangeur de chaleur 10. En fonctionnement normal, la pression des gaz EGR (G2) circulant à l'intérieur des canaux de distribution 105 des éléments d'échange 100 est supérieure à la pression des gaz à refroidir (G1) circulant à l'extérieur des éléments d'échange 100, les gaz EGR (G2) en surpression étant alors diffusés hors de l'élément d'échange de chaleur 100 par les ouvertures de diffusion 150. Du fait des ondes acoustiques et des variations de pression qu'elles entraînent, la pression des gaz EGR (G2) circulant à l'intérieur des canaux de distribution 105 des éléments d'échange 100 est parfois inférieure à la pression des gaz à refroidir (G1) circulant à l'extérieur des éléments d'échange 100, les gaz à refroidir (G1) en surpression ayant alors tendance à s'engouffrer dans l'élément d'échange de chaleur 100, via les ouvertures de diffusion, et à être entraînés avec les gaz EGR (G2) dans la canal de distribution 105 de l'élément d'échange de chaleur 100.

Ainsi, au fur et à mesure que les gaz EGR (G2) se déplacent dans le canal de distribution 105 de l'élément d'échange de chaleur 100, des gaz à refroidir (G1) s'ajoutent aux gaz EGR (G2) en pénétrant dans la conduite de distribution 105.

Les gaz EGR (G2) se déplacent dans la longueur de l'élément d'échange de chaleur 100. On définira, par convention, que les gaz EGR (G2) se déplacent de la gauche vers la droite dans la canal de distribution 105 en référence aux côtés gauche et droite du canal de distribution 105 représentés sur la figure 4.

Au fur et à mesure que les gaz EGR (G2) se déplacent dans le canal de distribution 105 de la gauche vers la droite, les gaz EGR (G2) sont dilués dans le canal de distribution 105 ce qui diminue leur concentration, les gaz EGR (G2) étant alors moins concentrés dans la partie droite du canal de distribution 105 que dans la partie gauche. Autrement dit, les gaz EGR (G2) sont mal répartis en aval de l'échangeur, les gaz EGR étant plus concentrés sur la partie gauche de l'échangeur de chaleur.

Afin d'éliminer cet inconvénient, en référence aux figures 3, 5 et 6, plus les ouvertures de diffusion 150 sont éloignées de l'orifice d'amenée des gaz EGR 104, en suivant le canal de distribution 105, plus les ouvertures de diffusion 150 sont grandes. Autrement dit, les ouvertures de diffusion 150 sont plus grandes sur la partie droite du canal de distribution 105 que celles sur la partie gauche. Autrement dit encore, plus la concentration des gaz EGR (G2) dans le flux de gaz circulant dans une zone du canal de distribution 105 est faible, plus la dimension de l'ouverture de diffusion 150 dans la zone du canal de distribution 105 est importante. La dimension des ouvertures de diffusion 150 est agencée pour assurer un débit constant en gaz EGR (G2) le long du canal de distribution 105 pour chacune des ouvertures de diffusion 105, le débit correspondant, au sens mathématique, au produit de la concentration des gaz EGR (G2) dans le flux de gaz circulant dans une zone du canal de distribution 105 par la dimension de l'ouverture de diffusion 150 ménagée dans ladite zone du canal de distribution 105.

De part la configuration des ouvertures de diffusion 150 le long du canal de distribution 105 de chacun des éléments d'échange 100, les gaz EGR (G2) sont mélangés de manière homogène avec le flux de gaz à refroidir (G1) et, ce, malgré la présence d'ondes acoustiques entraînant des variations de pression dans l'échangeur de chaleur 10.

Après avoir décrit la structure des moyens de l'invention, son fonctionnement et sa mise en oeuvre vont maintenant être abordés.

### Mise en oeuvre de l'invention

Lors du fonctionnement de l'échangeur à plaques 10, un flux de gaz d'admission (G1), destiné à être consommé dans un moteur thermique à combustion, circule d'amont en aval dans l'échangeur de chaleur 10 dans des canaux de conduite d'un flux de gaz à refroidir formés entre les éléments de refroidissement 100 de l'échangeur de chaleur 10.

Un fluide caloporteur (F) circule dans les canaux de circulation de fluide caloporteur 102 de chacun des éléments de refroidissement 100 de l'échangeur de chaleur 10 et échangent des calories avec le flux de gaz d'admission (G1) circulant dans les canaux de conduite de fluide. Un flux de gaz EGR (G2) est introduit dans les canaux de distribution de gaz EGR 105 de chacun des éléments de refroidissement 100 de l'échangeur de chaleur 10. Le flux de gaz EGR (G2) se diffuse hors des éléments 100 par des ouvertures de diffusion 150 ménagées dans les canaux de distribution de gaz EGR 105.

Le flux de gaz EGR (G2) est, dans cet exemple, refroidi avant d'être introduit dans les canaux de distribution des gaz EGR.

Les ouvertures de diffusion 150 sont spatialement réparties sur l'échangeur ce qui permet former des zones élémentaires de mélange discrètes, dans lesquelles le flux de gaz EGR (G2) se mélange au flux de gaz d'admission refroidi (G1).

Il existe ainsi une pluralité de zones de mélange entre les deux gaz (représentées par des flèches noires sur la figure 1, chaque flux de gaz étant divisé pour former des zones de mélange locales, le flux de gaz d'admission (G1) étant divisé selon les canaux de conduite et le flux de gaz EGR (G2) étant réparti et diffusé selon les ouvertures de diffusion 150. Dans cet exemple, l'échangeur de chaleur 10 forme une pluralité de points d'injection de gaz EGR (G2) dans le flux de gaz d'admission (G1), ce qui permet avantageusement de former une pluralité de zones de mélange locales discrètes, garantissant une homogénéisation du mélange des deux gaz qui seront consommés en aval dans le moteur.

Il va de soi que le flux de gaz d'admission (G1) peut également être réchauffé par des éléments de chauffage 100 conduisant un fluide à haute température transmettant des calories aux gaz d'admission. Ce mode d'utilisation est particulièrement avantageux lorsque le véhicule automobile, sur lequel est monté l'échangeur de chaleur, circule dans pays nordique dans lequel l'air d'admission est très froid.

La section par un plan transversal du boîtier du faisceau d'échange de chaleur de l'échangeur de chaleur définit la surface transversale d'échange (ici de refroidissement) du faisceau d'échange de chaleur. Dans l'exemple précédent, tous les éléments d'échange participent au mélange des gaz EGR, la surface de mélange étant donc sensiblement égale à celle d'échange. Il va de soi que seuls certains éléments d'échange pourraient participer au mélange, les dimensions de la surface de mélange du faisceau d'échange de chaleur seraient alors inférieures à celles de la surface d'échange.

## Revendications

1. Elément d'échange de chaleur (100) pour un échangeur de chaleur à plaques (10), destiné à échanger de la chaleur avec un premier flux de gaz (G1) par circulation d'un fluide caloporteur (F), comportant un canal (102) de circulation du fluide caloporteur,
- des moyens (104) d'introduction d'un deuxième flux de gaz (G2) dans ledit élément d'échange de chaleur (100), et **caractérisé par le fait que** l'élément d'échange de chaleur (100) comprend :
- des moyens (150) de répartition et de diffusion du deuxième flux de gaz (G2) hors dudit élément, le deuxième flux de gaz (G2) se mélangeant au premier flux de gaz (G1), et
- un canal de transport du deuxième flux de gaz (G2) reliant lesdits moyens d'introduction (104) auxdits moyens de répartition et de diffusion (150)
- ledit élément d'échange de chaleur étant agencé pour recevoir lesdits premier (G1) et deuxième (G2) flux de gaz et les mélanger sur une pluralité de zones élémentaires de mélange, discrètes et spatialement réparties.

2. Elément selon la revendication 1, dans lequel les canaux de circulation du fluide caloporteur (102) et de transport du deuxième flux de gaz (105) sont formés dans ledit élément d'échange de chaleur (100).

3. Elément selon l'une des revendications 1 ou 2, dans lequel l'élément
- d'échange de chaleur est formé de deux plaques en vis-à-vis.

4. Elément selon la revendication 3, dans lequel les plaques sont embouties pour former les canaux de circulation du fluide caloporteur (102) et de transport du deuxième flux de gaz (105).

5. Elément selon l'une des revendications précédentes, dans lequel lesdits canaux de circulation du fluide caloporteur (102) et de transport du deuxième flux de gaz (105) sont séparés par des moyens de rupture de conduction thermique (180).

6. Elément selon la revendication précédente, dans lequel lesdits moyens de rupture de conduction thermique (180) se présentent sous la forme de fentes de rupture thermique (180) formées dans l'élément d'échange de chaleur (100) entre le canal de circulation du fluide caloporteur (102) et le canal de transport du deuxième flux de gaz (105).

7. Elément selon l'une des revendications précédentes, dans lequel lesdits moyens de répartition et de diffusion (150) du deuxième flux de gaz (G2) hors de l'élément d'échange de chaleur (100) se présentent sous la forme d'ouvertures de diffusion (150, 151, 161) ménagées dans le canal de distribution du deuxième flux de gaz à diffuser (105).

8. Elément selon la revendication précédente, dans lequel le premier flux de gaz (G1) circulant de l'amont vers l'aval dans l'échangeur de chaleur (10) pour lequel l'élément d'échange de chaleur (100) est destiné, les ouvertures de diffusion (150, 151, 161) sont agencées pour diffuser le deuxième flux de gaz (G2) en aval dudit élément d'échange de chaleur (100).

9. Elément selon l'une des revendications 7 ou 8, dans lequel lesdites ouvertures de diffusion (150, 151, 161) sont orientées de manière à ce que des gaz condensés, issus de la condensation de gaz du deuxième flux de gaz à refroidir (G2), soient guidés hors de la conduite de distribution (105) sous l'effet de la gravité.

10. Elément selon la revendication 7, dans lequel les ouvertures de diffusion (171) sont ménagées dans l'épaisseur de l'élément d'échange de chaleur (100), à travers ledit canal de transport du deuxième flux de gaz (105).

11. Elément selon la revendication précédente, dans lequel la forme desdites ouvertures de diffusion traversantes (171) est agencée pour favoriser une aspiration du deuxième flux de gaz (G2) hors de la conduite de distribution (105) par effet Venturi.

12. Elément selon l'une des revendications 7 à 11, dans lequel les ouvertures de diffusion (150) sont de plus en plus grandes au fur et à mesure que l'on s'éloigne des moyens (104) d'introduction du deuxième flux de gaz (G2) en suivant le canal de distribution (105) dans l'élément d'échange de chaleur (100).

13. Faisceau d'échange de chaleur d'un échangeur de chaleur à plaques (10), comprenant au moins un élément d'échange de chaleur (100) selon l'une des revendications précédentes.

14. Echangeur de chaleur à plaques (10) comprenant au moins un faisceau d'échange de chaleur selon la revendication précédente.

15. Utilisation d'un echangeur selon la revendication précédente dans lequel ledit premier flux de gaz est un flux de gaz d'admission (G1) destiné à être consommé dans une chambre de combustion du moteur athermique, ledit deuxième flux gaz (G2) est un flux de gaz d'échappement recirculé et ledit fluide caloporteur de refroidissement (F) est de l'eau glycolée.

## Patentansprüche

1. Wärmeaustauschelement (100) für einen Platten-Wärmetauscher (10), welcher dafür vorgesehen ist, Wärme mit einem ersten Gasstrom (G1) durch Zirkulation eines Wärmeträgerfluids (F) auszutauschen, welcher einen Kanal (102) zur Zirkulation des Wärmeträgerfluids, Mittel (104) zur Einleitung eines zweiten Gasstroms (G2) in das Wärmeaustauschelement (100) umfasst und **dadurch gekennzeichnet, dass** das Wärmeaustauschelement (100) Folgendes aufweist:
Mittel (150) zur Aufteilung und Diffusion des zweiten Gasstroms (G2) aus dem Element heraus, wobei sich der zweite Gasstrom (G2) mit dem ersten Gasstrom (G1) vermischt, und
einen Kanal zum Transport des zweiten Gasstroms (G2), welcher die Mittel zur Einleitung (104) mit den Mitteln zur Aufteilung und Diffusion (150) verbindet,
wobei das Wärmeaustauschelement dafür eingerichtet ist, um den ersten (G1) und zweiten (G2) Gasstrom aufzunehmen und sie über eine Vielzahl von diskreten und räumlich verteilten elementaren Mischbereichen zu mischen.

2. Element nach Anspruch 1, bei welchem die Kanäle zur Zirkulation des Wärmeträgerfluids (102) und zum Transport des zweiten Gasstroms (105) in dem Wärmeaustauschelement (100) ausgebildet sind.

3. Element nach einem der Ansprüche 1 oder 2, bei welchem das Wärmeaustauschelement aus zwei sich gegenüber liegenden Platten gebildet ist.

4. Element nach Anspruch 3, bei welchem die Platten tiefgezogen sind, um die Kanäle zur Zirkulation des Wärmeträgerfluids (102) und zum Transport des zweiten Gasstroms (105) zu bilden.

5. Element nach einem der vorhergehenden Ansprüche, bei welchem die Kanäle zur Zirkulation des Wärmeträgerfluids (102) und zum Transport des zweiten Gasstroms (105) durch Mittel zur Trennung der Wärmeleitung (180) getrennt sind.

6. Element nach dem vorhergehenden Anspruch, bei welchem die Mittel zur Trennung der Wärmeleitung (180) sich in der Form von thermischen Trennungsschlitzen (180) darstellen, welche in dem Wärmeaustauschelement (100) zwischen dem Kanal zur Zirkulation des Wärmeträgerfluids (102) und dem Kanal zum Transport des zweiten Gasstroms (105) ausgebildet sind.

7. Element nach einem der vorhergehenden Ansprüche, bei welchem die Mittel zur Aufteilung und Diffusion (150) des zweiten Gasstroms (G2) aus dem Wärmeaustauschelement (100) heraus sich in der Form von Diffusionsöffnungen (150, 151, 161) darstellen, welche in dem Kanal zur Verteilung des zweiten zu diffundierenden Gasstroms (105) eingebracht sind.

8. Element nach dem vorhergehenden Anspruch, bei welchem der erste Gasstrom (G1) in dem Wärmetauscher (10), für welchen das Wärmeaustauschelement (100) vorgesehen ist, von oben nach unten zirkuliert, und die Diffusionsöffnungen (150, 151, 161) dafür eingerichtet sind, um den zweiten Gasstrom (G2) stromabwärts von dem Wärmeaustauschelement (100) zu diffundieren.

9. Element nach einem der Ansprüche 7 oder 8, bei welchem die Diffusionsöffnungen (150, 151, 161) derartig ausgerichtet sind, dass kondensierte Gase, welche von der Gaskondensation des zweiten abzukühlenden Gasstroms (G2) herrühren, unter der Einwirkung der Schwerkraft aus der Verteilungsleitung (105) heraus geführt werden.

10. Element nach Anspruch 7, bei welchem die Diffusionsöffnungen (171) in der Dicke des Wärmeaustauschelements (100) durch den Kanal zum Transport des zweiten Gasstroms (105) hindurch eingebracht sind.

11. Element nach einem der vorhergehenden Ansprüche, bei welchem die Form der durchquerenden Diffusionsöffnungen (171) dafür eingerichtet ist, um eine Ansaugung des zweiten Gasstroms (G2) aus der Verteilungsleitung (105) durch den Venturi-Effekt zu begünstigen.

12. Element nach einem der Ansprüche 7 bis 11, bei welchem die Diffusionsöffnungen (150) in dem Maße, wie man sich gemäß dem Verteilungskanal (105) in dem Wärmeaustauschelement (100) von den Mitteln zur Einleitung (104) des zweiten Gasstroms (G2) entfernt, immer größer werden.

13. Wärmeaustauscheinheit eines Platten-Wärmetauschers (10), welche mindestens ein Wärmeaustauschelement (100) nach einem der vorhergehenden Ansprüche aufweist.

14. Platten-Wärmetauscher (10), welcher mindestens eine Wärmeaustauscheinheit nach dem vorhergehenden Anspruch aufweist.

15. Verwendung eines Tauschers nach dem vorhergehenden Anspruch, bei welchem der erste Gasstrom ein Einlass-Gasstrom (G1) ist, welcher dafür vorgesehen ist, in einem Verbrennungsraum des Verbrennungsmotors verbraucht zu werden, wobei der zweite Gasstrom (G2) ein zurückgeführter Abgasstrom ist und das Wärmeträgerfluid zur Kühlung (F) ein Wasser-Glykol-Gemisch ist.

## Claims

1. Heat exchange element (100) for a plate heat exchanger (10), intended to exchange heat with a first gas flow (G1) by circulation of a heat-transfer fluid (F), comprising a channel (102) for circulating the heat-transfer fluid, and means (104) for introducing a second gas flow (G2) into the said heat exchange element (100), and **characterized in that** the heat exchange element (100) comprises:
- means (150) for distributing and diffusing the second gas flow (G2) out of the said element, the second gas flow (G2) mixing with the first gas flow (G1), and
- a channel for transporting the second gas flow (G2) that connects the said introduction means (104) to the said distribution and diffusion means (150),
- the said heat exchange element being arranged to receive the said first (G1) and second (G2) gas flows and mix them over a plurality of elementary mixing zones which are discrete and spatially distributed.

2. Element according to Claim 1, in which the channel (102) for circulating the heat-transfer fluid and the channel (105) for transporting the second gas flow are formed in the said heat exchange element (100).

3. Element according to either of Claims 1 and 2, in which the heat exchange element is formed by two plates facing one another.

4. Element according to Claim 3, in which the plates are stamped to form the channel (102) for circulating the heat-transfer fluid and the channel (105) for transporting the second gas flow.

5. Element according to one of the preceding claims, in which the said channel (102) for circulating the heat-transfer fluid and the said channel (105) for transporting the second gas flow are separated by thermal-conduction break means (180).

6. Element according to the preceding claim, in which the said thermal-conduction break means (180) take the form of thermal-break slots (180) formed in the heat exchange element (100) between the channel (102) for circulating the heat-transfer fluid and the channel (105) for transporting the second gas flow.

7. Element according to one of the preceding claims, in which the said means (150) for distributing and diffusing the second gas flow (G2) out of the heat exchange element (100) take the form of diffusion openings (150, 151, 161) formed in the channel (105) for distributing the second gas flow to be diffused.

8. Element according to the preceding claim, in which, with the first gas flow (G1) circulating from upstream to downstream in the heat exchanger (10) for which the heat exchange element (100) is intended, the diffusion openings (150, 151, 161) are arranged to diffuse the second gas flow (G2) downstream of the said heat exchange element (100).

9. Element according to either of Claims 7 and 8, in which the said diffusion openings (150, 151, 161) are oriented in such a way that condensed gases obtained from the gas condensation of the second gas flow (G2) to be cooled are guided out of the distribution duct (105) under the effect of gravity.

10. Element according to Claim 7, in which the diffusion openings (171) are formed in the thickness of the heat exchange element (100) through the said channel (105) for transporting the second gas flow.

11. Element according to the preceding claim, in which the shape of the said diffusion through-openings (171) is arranged to promote aspiration of the second gas flow (G2) out of the distribution duct (105) by the Venturi effect.

12. Element according to one of Claims 7 to 11, in which the diffusion openings (150) become increasingly large the further the distance from the means (104) for introducing the second gas flow (G2) following the distribution channel (105) in the heat exchange element (100).

13. Heat exchange bundle of a plate heat exchanger (10), comprising at least one heat exchange element (100) according to one of the preceding claims.

14. Plate heat exchanger (10) comprising at least one heat exchange bundle according to the preceding claim.

15. Use of an exchanger according to the preceding claim in which the said first gas flow is an intake gas flow (G1) intended to be consumed in a combustion chamber of the combustion engine, the said second gas flow (G2) is a recirculated exhaust gas flow and the said cooling heat-transfer fluid (F) is water containing glycol.
